(19)

Europäisches
Patentamt
European
Patent Office
Office européen
des brevets

(11)     EP 1 777 547 A1

(12)     EUROPEAN PATENT APPLICATION

(43) Date of publication:
25.04.2007 Bulletin 2007/17

(51) Int Cl.:
G01S 13/32 (2006.01)

(21) Application number: 05256584.3

(22) Date of filing: 24.10.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicants:
• Mitsubishi Electric Information Technology
Centre
Europe B.V.
Guildford,
Surrey GU2 5YD (GB)
Designated Contracting States:
GB
• MITSUBISHI DENKI KABUSHIKI KAISHA
Chiyoda-ku
Tokyo 100-8310 (JP)
Designated Contracting States:
AT BE BG CH CY CZ DE DK EE ES FI FR GR HU
IE IS IT LI LT LU LV MC NL PL PT RO SE SI SK TR

(72) Inventor: Szjanowski, Wieslaw Jerzy
Guildford
Surrey, GU1 2AR (GB)

(74) Representative: Burke, Steven David et al
R.G.C. Jenkins & Co.
26 Caxton Street
London SW1H 0RJ (GB)

(54) **Signal processing and time delay measurement based on combined correlation and differential correlation**

(57)     Two versions of a binary signal having an irregular sequence of states are processed by deriving (i) a first value which represents the average time derivative of one signal at the times of transitions in the other signal, and (ii) a correlation value for the two signals, and then combining the first value with the correlation value. For a given relative delay introduced between the signals, the resultant combined value indicates whether the introduced delay brings the transitions in the two signals into coincidence. The process can be repeated for other introduced delays to determine the amount of delay between the two signals.

*Fig. 16*

## Description

BACKGROUND OF THE INVENTION

Field of the Invention

This invention relates to a method and apparatus for processing signals, for example for measuring the time delay between two signals. The invention is especially, but not exclusively, applicable to measuring the delay between two versions of a binary signal. The delay may represent the range of a detected object, for example in a system which transmits a signal, receives its reflection and measures the delay between the reflection and a reference signal. Such arrangements are useful in ranging applications, e.g. for estimating the distance to obstacles in automotive spread-spectrum systems utilizing random or pseudorandom binary waveforms. In other applications, the signals may be received from sources at known locations so the receiver's position can be determined.

Description of the Prior Art

One important type of automotive obstacle-detection system employs a continuous microwave carrier suitably modulated by a *synchronous binary* (random or pseudorandom) *waveform.* The shape of the spectrum, including its spread, of the resulting transmitted signal will depend on the characteristics of the modulating binary waveform. A decision regarding the presence or absence of an obstacle at a predetermined range is based on the result of jointly processing a transmitted signal and signals reflected back by various objects present in the field of view of the system.

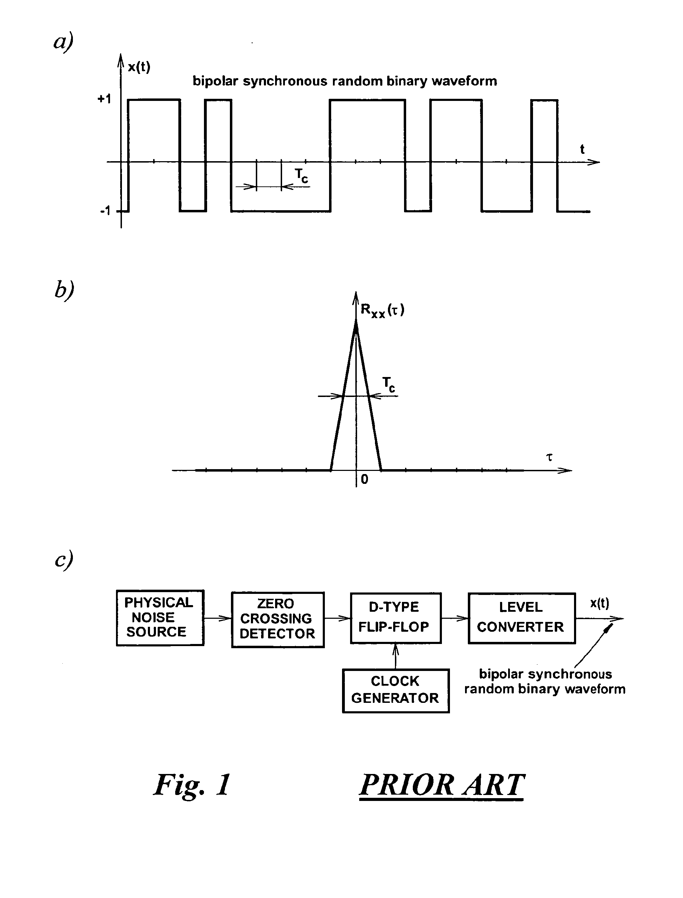

When a continuous synchronous binary waveform is employed for ranging, the optimal shape of its autocorrelation function will have a triangular form with the 'half-height' duration equal to the period $T_c$ of a clock employed by a circuit producing the waveform. Fig. 1a illustrates schematically a synchronous random binary waveform x(t), and Fig. 1b depicts the shape of the autocorrelation function $R_{xx}(\tau)$ optimal for ranging applications. Such shape of the (theoretical) autocorrelation function characterizes purely random synchronous binary waveforms.

Fig. 1c is a block diagram of a conventional circuit used to generate a bipolar synchronous random binary waveform. The circuit comprises a wideband physical noise source driving a zero-crossing detector, a D-type flip-flop followed by a voltage level converter and a clock generator. The characteristics of the noise source are so chosen as to obtain statistically independent (or, at least, substantially uncorrelated) random noise samples at the time instants determined by the clock generator.

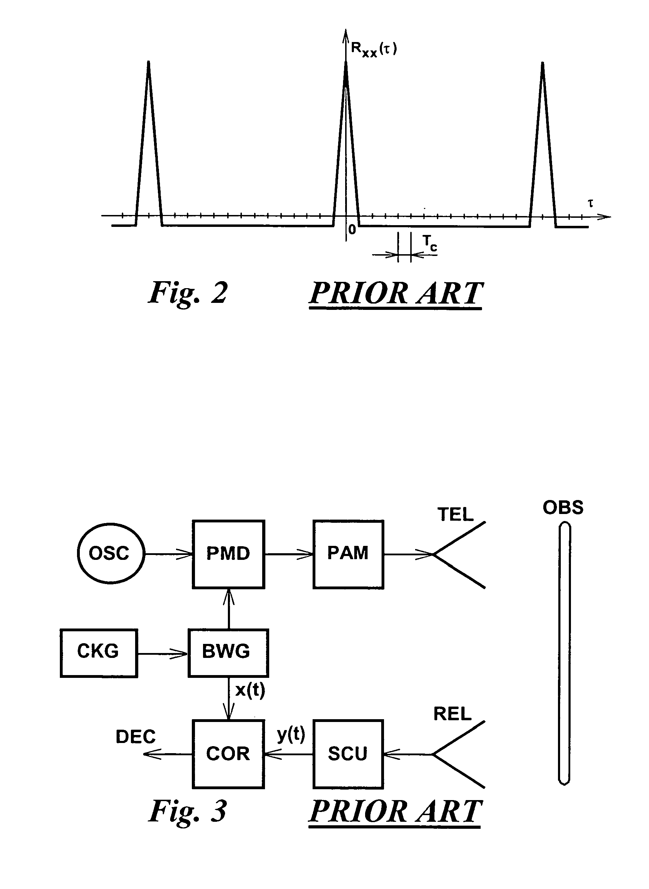

A broad class of useful synchronous binary waveforms can be obtained from pseudorandom binary sequences, as is well known to those skilled in the art. Fig. 2 shows an example of the autocorrelation function $R_{xx}(\tau)$ of a periodic bipolar pseudorandom binary waveform x(t). As seen, the autocorrelation function is also periodic and it assumes a negative, rather than zero, value outside the periodic triangular peaks. From the prior art, it is also known that this residual negative value can be reduced to a negligible level by utilizing 'long' pseudorandom binary sequences. Accordingly, the autocorrelation function of a suitably selected pseudorandom binary waveform, observed over a single period, can adequately approximate the form of the autocorrelation function characterizing a purely random synchronous binary waveform.

In a multi-user environment, many similar obstacle-detection systems will operate in the same region sharing the same frequency band. Consequently, to avoid mutual interference, each system should use a distinct signal, preferably orthogonal to the signals employed by all other systems. Because the number and type of systems sharing the same frequency band is unknown, it is extremely difficult (or inconvenient, at best) to assign a distinct pseudorandom binary sequence to each system. Therefore, in a multi-user environment, the use of purely random or aperiodic chaotic binary waveforms may be preferable. Furthermore, because purely random binary waveforms exhibit maximum unpredictability, they are also less vulnerable to intercept and intelligent jamming.

Fig. 3 is a block diagram of a conventional obstacle-detection system utilizing a continuous microwave carrier, phase-modulated by a synchronous binary waveform. The system comprises a generator BWG that produces a synchronous binary waveform that may assume at each time instant only one of two values: +1 or -1; the waveform may switch to the alternate state at the time instants determined by a clock generator CKG producing clock pulses with period $T_c$. The system also has an oscillator OSC that generates a sinusoidal signal with required carrier frequency, a phase modulator PMD that modulates the phase of the carrier signal in a binary 0/n fashion, a power amplifier PAM that amplifies the phase-modulated carrier signal to a required level, a transmit element TEL that radiates an electromagnetic wave representing the modulated carrier signal towards an obstacle OBS, a suitable receive sensor REL that receives an electromagnetic wave reflected back by the obstacle OBS, a signal conditioning unit SCU that amplifies and pre-processes the signal provided by the receive sensor REL and a correlator COR that processes jointly a transmitted (reference) binary waveform x(t) produced by the generator BWG and a received waveform y(t) supplied by the signal conditioning unit SCU to provide a decision DEC regarding the presence or absence of an obstacle at a predetermined range.

For the purpose of distance determination, a time-delay estimate is obtained from the reference waveform x(t) and a received signal y(t) of the form

$$y(t) = \alpha x(t - \Delta t) + n(t)$$

where x(t) is a transmitted waveform, $\alpha$ denotes attenuation, $\Delta t$ is the time delay, and n(t) represents background noise and other interference. The distance L to the obstacle is then determined from L = c ($\Delta t/2$), where c is the speed of light.

The value of the time delay $\Delta t$ is usually determined by cross-correlating the two signals x(t) and y(t), i.e. by performing the operation

$$R_{xy}(\tau) = \frac{1}{T}\int_0^{-T} x(t - \tau)\,y(t)\,dt$$

where the integral is evaluated over the observation interval of duration T and for a range, $\tau_{min} < \tau < \tau_{max}$, of hypothesised time delays $\tau$. The value of argument $\tau$, say $\tau_0$, that maximises the cross-correlation function $R_{xy}(\tau)$ provides an estimate of the unknown time delay $\Delta t$.

In general, the operation of cross-correlation comprises the following steps:

1. selecting a value $\tau$ from the range $\tau_{min} < \tau < \tau_{max}$ of delays of interest;
2. delaying the reference signal x(t) by this value;
3. multiplying the values of a received signal y(t) and those of the delayed reference x(t-$\tau$);
4. integrating the product values obtained in step 3 over a specified observation time interval T.

The above procedure is repeated for all delay values $\tau$ of interest from the range $\tau_{min} < \tau < \tau_{max}$.

In practice, prior to cross-correlation, the received signal y(t) may be suitably pre-filtered to accentuate frequencies for which the signal-to-noise ratio (SNR) is highest and to attenuate background noise, thus increasing the resulting overall SNR. A cross-correlator utilizing signal pre-filtering is known in the prior art as a *generalized cross-correlator.*

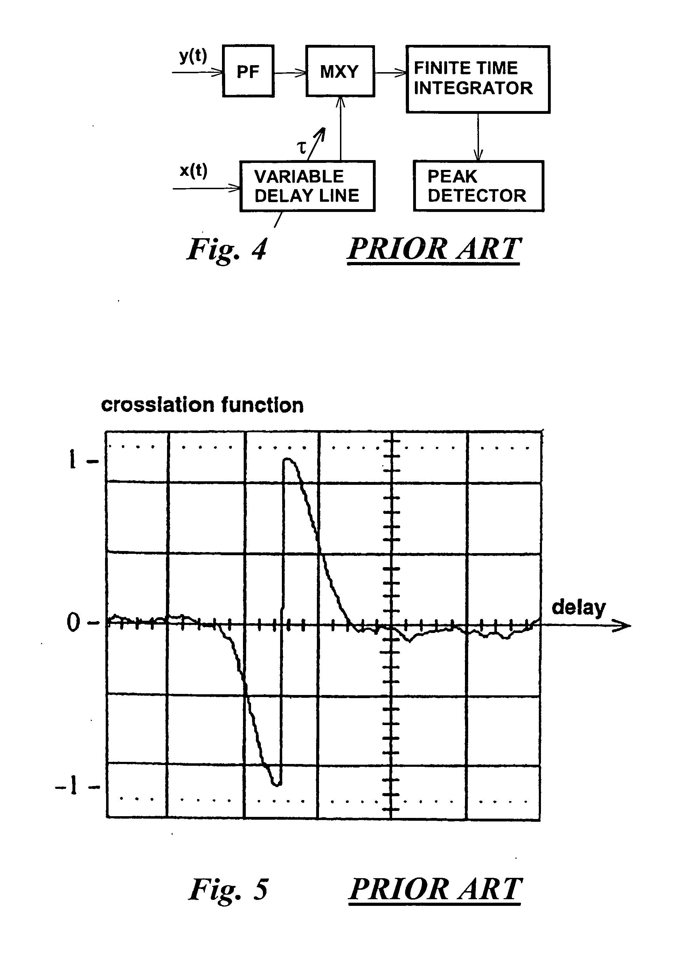

A block diagram of a conventional cross-correlator system is presented in Fig. 4. The system comprises a pre-filter PF, a multiplier MXY, a variable delay line, a finite-time integrator and a peak detector. The system performs operations required to determine a value of cross-correlation for each selected time delay $\tau$.

The cross-correlation process, including pre-filtering, can also be implemented digitally, if sufficient sampling and quantising of the signals is used.

In the prior art, the correlator system shown in Fig. 4 is referred to as a *serial correlator* in contrast to a parallel (or multi-channel) configuration in which values of correlation are determined concurrently for different values of delay $\tau$.

U.S. Patent No. 6,539,320 discloses an alternative method for determining the delay between a primary reference signal and its time-delayed replica. In the following, the disclosed method will be referred to as *crosslation,* and a system implementing the method will be referred to as a *crosslator.* The contents of U.S. Patent No. 6,539,320 are incorporated herein by reference. A crosslation technique involves using events (such as zero crossings) from one signal to sample the other signal. The events occur at irregular intervals, and are preferably at least substantially aperiodic. The samples are combined to derive a value which represents the extent to which the sampling coincides with features of the second signal corresponding to the events. By repeating this process for different delays between the first and second signals, it is possible to find the delay which gives rise to the value representing the greatest coincidence of events, i.e. the delay between the two signals.

According to the above disclosure, a binary bipolar signal x(t) is subjected to an unknown delay to produce a signal y(t), and a reference version of the signal x(t) is examined to determine the time instants at which its level crosses zero, either with a positive slope (an *upcrossing)* or with a negative slope (a *downcrossing).* The time instants of these crossing events are used to obtain respective segments of the signal y(t), the segments having a predetermined duration. The segments corresponding to zero upcrossings are all summed, and the segments corresponding to zero downcrossings are all subtracted from the resulting sum. A representation of such segment combination is then examined to locate a feature in the form of an S-shaped odd function of time delay. In the following, this S-shaped function will be referred to as the *crosslation* function.

The position within the representation of a zero-crossing in the centre of the crosslation function represents the amount of the mutual delay between the two signals being processed. Fig. 5 shows an example of an S-shaped crosslation function obtained experimentally by processing jointly a random binary waveform and its time-delayed replica.

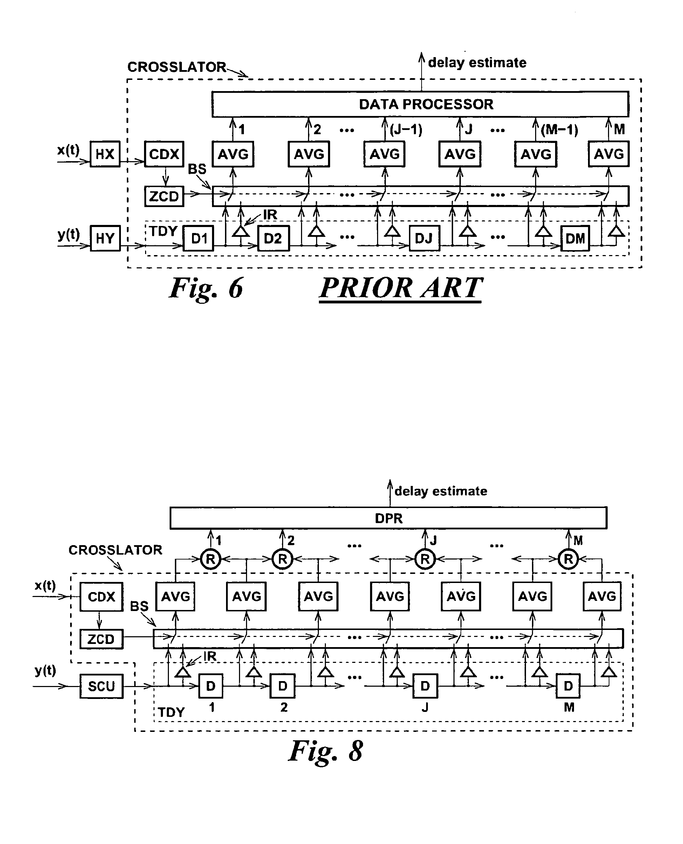

Fig. 6 shows one possible crosslation system capable of determining the delay between a signal x(t) and its time-delayed replica. The signal y(t) is the sum of noise n(t) and the signal x(t) attenuated by the factor of $\alpha$ and delayed by $\Delta t$.

The signal y(t) is converted by a hard limiter HY into a corresponding bipolar binary waveform which is applied to the input of a tapped delay line TDY; the TDY comprises a cascade of M identical unit-delay cells D1, D2, ... , DJ, ... , DM. Each cell provides a suitably delayed output signal and also its polarity-reversed replica supplied by inverter IR.

The parallel outputs of the tapped delay line TDY are connected through a bank of switches BS to M averaging or integrating units AVG that accumulate data supplied by the tapped delay line TDY. The switches, normally open, are closed when a suitable signal is applied to their common control input. The time interval during which the switches are closed should be sufficiently long so that each new incremental signal sample can be acquired with minimal loss.

The time instants, at which the switches are closed and new data supplied to the averaging units, are determined by a zero-crossing detector ZCD that detects the crossings of zero level of a binary waveform obtained from the reference signal x(t) processed by a hard limiter HX; the resulting binary waveform is then delayed by a constant-delay line CDX. The value of the constant delay introduced by the CDX is equal to or greater than the expected maximum value of time delay to be determined. It should be pointed out that the averaging units receive the incremental input values from the tapped delay line TDY in a nonuniform manner, at the time instants coinciding with zero crossings of the delayed reference signal x(t).

Each time a zero upcrossing occurs, there appears transiently at the inputs of the averaging units a replica of a respective segment of the binary waveform obtained from the signal y(t). Similarly, each time a zero downcrossing occurs, there appears transiently at the inputs of the averaging units a *reversed-polarity* replica of a respective segment of the binary waveform obtained from the signal y(t). The averaging units thus combine the two groups of these segments to produce a representation of a combined waveform, like that of Fig. 5, which has an arbitrary time scale along the x-axis and which indicates on the y-axis units corresponding to the amplitude of the binary waveform from hard limiter HY.

The signals obtained at the outputs of the averaging units AVG are used by the data processor. The operations performed by the data processor are so defined and structured as to determine the location of the zero crossing situated between the two opposite-polarity main peaks exhibited by the resulting S-shaped crosslation function. The location of this zero crossing corresponds to the time delay between the signals x(t) and y (t). A set of suitable operations and their sequence can be constructed by anyone skilled in the art.

In some applications, in order to simplify the structure of a crosslator system, instead of using both upcrossings and downcrossings, the reference version of a wideband non-deterministic signal x(t) may be examined to determine the time instants of zero upcrossings (or downcrossings) only. However, irrespective of the particular arrangement used, a crosslation-based technique always includes a step of determining the time instants at which a reference signal crosses a predetermined threshold. Those specific time instants are also referred to as *significant events.* In a hardware implementation of crosslation, significant events define the time instants at which suitable trigger pulses are generated.

The crosslation techniques of U.S. Patent No. 6,539,320 for time-delay determination are robust and relatively easy to implement in hardware. However, it has been proposed (see co-pending European Patent Application No. 04252785.3, filed 13 May 2004, corresponding to US Patent Application Serial No. 11/127271, filed 12 May 2005, referred to herein as "the first earlier application") to provide a system which is better suited to applications in which the obstacle-detection system should provide high-resolution capability for distinguishing closely spaced multiple obstacles.

The first earlier application discloses a method according to which, for the purpose of time-delay measurement, the crosslation function is first converted into a unipolar impulse-like function. In the following, this function will be referred to as *differential crosslation* function.

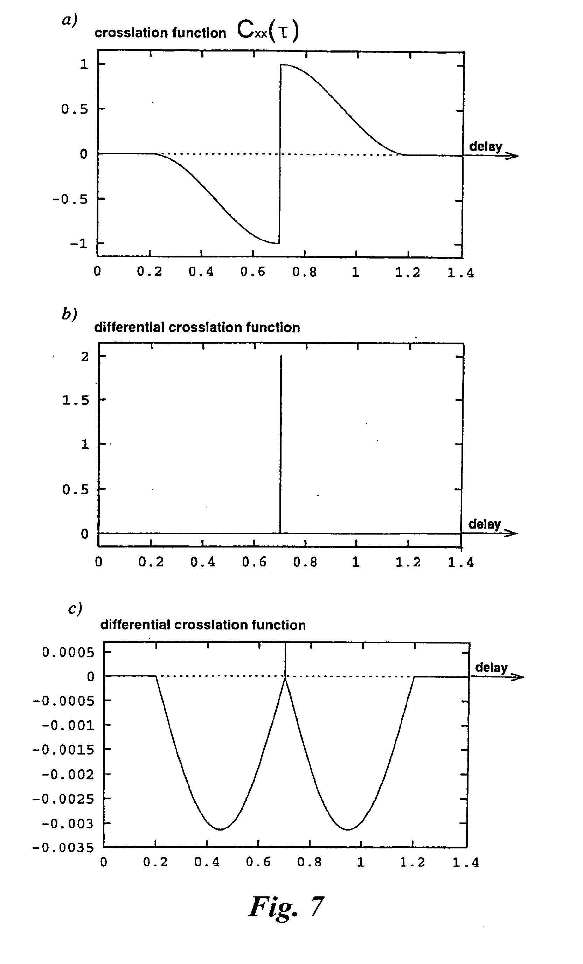

The mechanism devised for obtaining the differential crosslation function will be explained in more detail with reference to Fig. 7. Each of Figs. 7a to 7c is a chart with arbitrary time units along the x-axis and amplitude units along the y-axis.

An example of a theoretical crosslation function is shown in Fig. 7a. This particular shape characterises a bipolar random binary waveform obtained from zero crossings of Gaussian noise with a low-pass frequency spectrum of a Gaussian shape.

The properties of the crosslation function characterizing random binary waveforms are discussed in more detail in: W. J. Szajnowski and P. A. Ratliff, Implicit Averaging and Delay Determination of Random Binary Waveforms. IEEE Signal Processing Letters. 9, 193-195 (2002), the contents of which are incorporated herein by reference.

As shown in the above publication, in the case of an ideal random binary waveform with zero switching times between the two levels, the crosslation function has always a positive *step* appearing at the delay instant, irrespective of the characteristics of the binary waveform. Therefore, the *derivative* of the crosslation function will always have a dominant component in the form of the Dirac *delta function.* In practical implementations, the time derivative may conveniently be substituted by a difference between a crosslation function and its replica suitably shifted in time.

Fig. 7b and Fig. 7c show (to different scales) the differential crosslation function, being the difference between the crosslation function of Fig. 7a and its replica shifted by 0.001 of the time unit. As seen, the peak of the differential crosslation function, corresponding to the unknown delay, is equal to 2, and the magnitude of the off-peak *negative* sidelobes (shown in detail in Fig. 7c) does not exceed the value of 0.0032. Therefore, in this case, the peak-to-sidelobe ratio is greater than 625. The value of this ratio tends to infinity as the delay used for the determining differential crosslation approaches zero.

Accordingly, the unknown time delay can be determined in a more convenient and precise manner by first performing on the primary crosslation function an operation substantially equivalent to calculating the derivative, with respect to relative time delay, of that function.

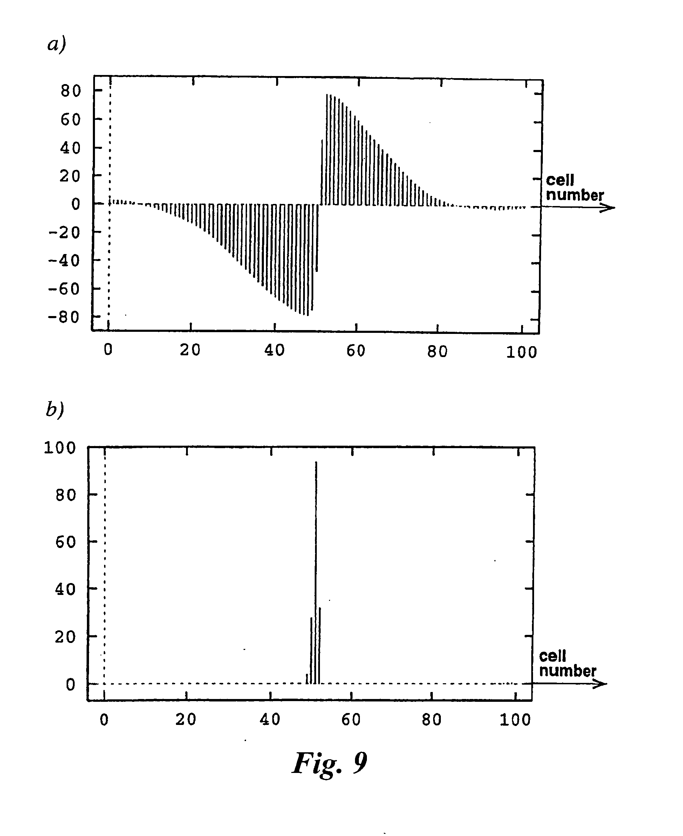

Fig. 8 is a block diagram of a variant of a differential crosslator, disclosed in the first earlier application, capable of determining the delay between two signals. The differential crosslator comprises a signal conditioning unit SCU, a crosslator, an array of identical difference circuits R, and a data processor DPR supplying an estimate of an unknown time delay.

The crosslator comprises a cascade TDY of M unit-delay cells D, a bank of switches BS, (M+1) identical averaging (or integrating) circuits AVG, a constant delay CDX, and a zero-crossing detector ZCD. A delay cell D with index k, where k = 1, 2, ... , M, can supply both a delayed signal y(t-kD) and its polarity-reversed replica -y(t-kD), where D denotes a unit-delay value.

As seen, in this configuration, although the system employs M difference circuits and M unit-delay cells, the number of averaging circuits AVG is equal to (M+1). Because each difference circuit R operates on the outputs of two adjacent averaging circuits AVG, an impulse will appear at a location along the array of difference circuits R corresponding to the unknown delay. Accordingly, the index of the location at which the impulse occurs will determine uniquely the value of unknown time delay $\Delta t$.

In the presence of noise and other interference, and also due to finite switching times in physical circuitry, the crosslation function will always exhibit a non-zero transition region rather than a steep step in the centre. Accordingly, the main peak of the resulting differential crosslation function will differ from a single impulse and may even appear at the outputs of a few adjacent difference circuits. This effect is illustrated in Fig. 9, which depicts some selected experimental results.

Fig. 9a is an example of a discrete representation of an empirical crosslation function, and Fig. 9b shows the differential crosslation function obtained as the difference between the two replicas of the empirical crosslation function shifted by a unit step (a single cell). As seen, in addition to a dominant main peak there are also some positive sidelobes on both sides. However, the location of the main peak can always be determined by applying a suitable decision threshold to difference values.

The values produced by the array of difference circuits R are supplied to the data processor DPR that determines the location of the impulse along the array to calculate the value of time delay of interest. The location of the impulse centre can be determined from the peak value, the 'centre of gravity' or the median of the impulse. Operations required to perform such tasks can be implemented by anyone skilled in the art.

The first earlier application also discloses a system in which the differential crosslation function can be obtained through the use of an auxiliary circuit following a zero-crossing detector, yet without the use of any explicit difference circuits.

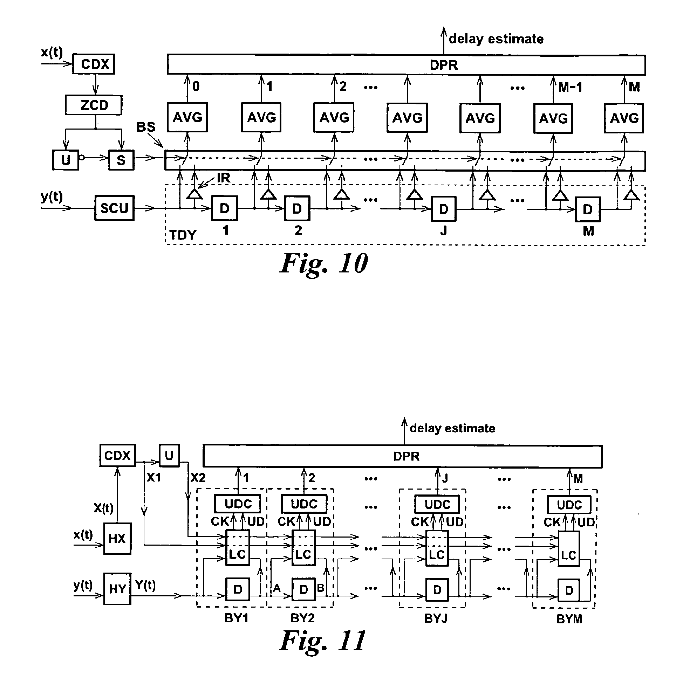

Fig. 10 is a block diagram of a suitably modified differential crosslator capable of determining the delay between a signal and its time-delayed replica. In this arrangement, there are no difference circuits, and the processor employs an auxiliary delay unit U and a pulse combiner S. When a rising edge (a zero upcrossing) is detected in a reference binary waveform x(t), a positive pulse is produced at the output of the zero-crossing detector ZCD. Because this pulse is delayed and inverted by the auxiliary delay unit U, the combiner S will produce a pulse doublet comprising a primary positive pulse followed shortly by its negative replica. Similarly, when a falling edge (a zero downcrossing) is detected in x(t), the negative pulse produced at the output of ZCD is delayed and inverted by the auxiliary delay unit U, so that the combiner S will produce a pulse doublet comprising a primary negative pulse followed shortly by its positive replica.

Accordingly, in response to detecting a single zero upcrossing, the bank of switches BS will transfer to the averaging circuits AVG a sampled representation of a binary waveform y(t) followed by a delayed and polarity-reversed replica of such representation. Similarly, when a zero downcrossing is detected, the bank of switches BS will transfer to the averaging circuits AVG a polarity-reversed sampled representation of a binary waveform y(t) followed by a delayed (and not polarity-reversed) replica of such representation. As a result, the array of averaging circuits AVG will produce directly the difference between a crosslation function and its replica delayed by the amount introduced by the auxiliary delay unit U.

Other functions and operations performed by the modified processor are equivalent to those of the processor of Fig. 8.

The differential crosslator shown in Fig. 10 can offer the following specific advantages:

-     no difference circuits are required;
-     the delay introduced by the auxiliary delay unit U may differ from the unit delay of delay cell D; accordingly, a better approximation of the derivative can be obtained for auxiliary delays less than that of cell D.

A suitably modified version of either of the two differential crosslators, shown in Fig. 8 and Fig. 10, may be employed instead of a correlator COR in the obstacle-detection system of Fig. 3 to provide improved time-delay (and distance) measurements. The circuits of Figs. 8 and 10 may operate using analog signals from the signal conditioning circuit SCU, or may operate using digital signals by incorporating an analog-to-digital converter in the conditioning circuit SCU and using suitable digital delay circuits D.

European patent application No. 04252786.1, filed 13 May 2004 (corresponding to US Patent Application Serial No. 11/127165, filed 12 May 2005, and referred to herein as "the second earlier application") discloses a method according to which all functions and operations performed in a differential crosslator by switches, zero-crossing detector, averaging circuits and difference circuits are implemented in a digital fashion.

Fig. 11 is a block diagram of a differential crosslator disclosed in the second earlier application and capable of determining the delay between two binary bipolar waveforms x(t) and y(t). The system comprises two hard limiters, HX and HY, a data processor DPR, an array of identical logic blocks {BY1, BY2, ... , BYM} a constant delay line CDX followed by a single delay unit U. Each logic block consists of a delay unit D, connected to a logic cell LC that drives a reversible (up/down) binary counter UDC. All delay units within the array form jointly a multi-tap delay cascade; each logic cell LC within the array receives two signals from its own respective delay unit D and another two signals X1 and X2 from the delay unit U.

The operation of the differential crosslator of Fig. 11 can be summarised as follows:

- A binary waveform X(t), defined by zero-crossings of the signals x(t), is suitably delayed by the constant delay line CDX followed by the delay unit U which produces two mutually delayed logic signals X1 and X2;

- A binary waveform Y(t), defined by zero-crossings of the signals y(t), propagates along the delay cascade, and each delay unit D of the cascade supplies two mutually delayed logic signals appearing at its input and output, respectively;

- Each logic cell LC combines logic information received from outputs X1 and X2 of the delay unit U, with the logic states of the input and output of its own delay unit D to make the following decisions:

  1. a state transition occurring in its own delay unit D has coincided with that occurring in the delay unit U;
  2. the coinciding transitions have been either *concordant* (i.e., of the same type, both up or both down), or *discordant* (i.e., of the opposite type);

- A reversible counter UDC in each logic cell LC 'counts up', if a concordant coincidence has been declared, and the UDC 'counts down', if a discordant coincidence has been declared.

- All the counters UDC are cleared at the beginning of a measurement cycle, initiated by an external control unit (not shown), and the contents of the counters are transferred to the data processor DPR when the measurement cycle is terminated.

- The functions and operations performed by the data processor DPR are equivalent to those performed by data processors used by the systems of Fig. 8 and Fig. 10.

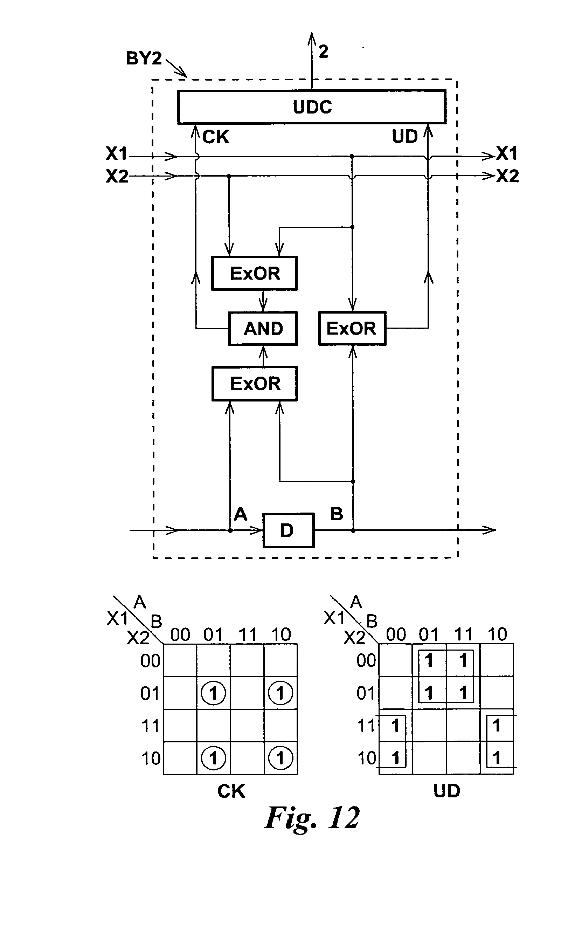

For illustrative purposes, Fig. 12 depicts an example of a possible structure of one of M identical logic blocks LC; in this case, logic block BY2. All input variables: A, B, X1, and X2 are logic variables, 0 or 1, corresponding to the two levels of a binary waveform. The reversible counter UDC counts up, when a pulse appears at input CK and UD = 1; if UD = 0, the counter counts down when a pulse occurs at input CK. Other functionally equivalent implementations of the logic block will be obvious to those skilled in the art.

The digital differential crosslator depicted in Fig. 11 may be incorporated into the obstacle-detection system of Fig. 3 to replace the correlator COR and provide improved time-delay (and distance) measurements.

Although the differential crosslator discussed above has a parallel structure, the second earlier application also discloses a serial differential crosslator constructed using logic circuits.

There are known advantages in transmitting random binary signals for the purpose of object detection. It is possible to obtain good energy efficiency particularly when transmitting using an appropriately modulated continuous wave transmission. By selecting the signal states using a pseudo-random generator, so that the binary signal has a sharp auto-correlation function, rapid convergence is possible.

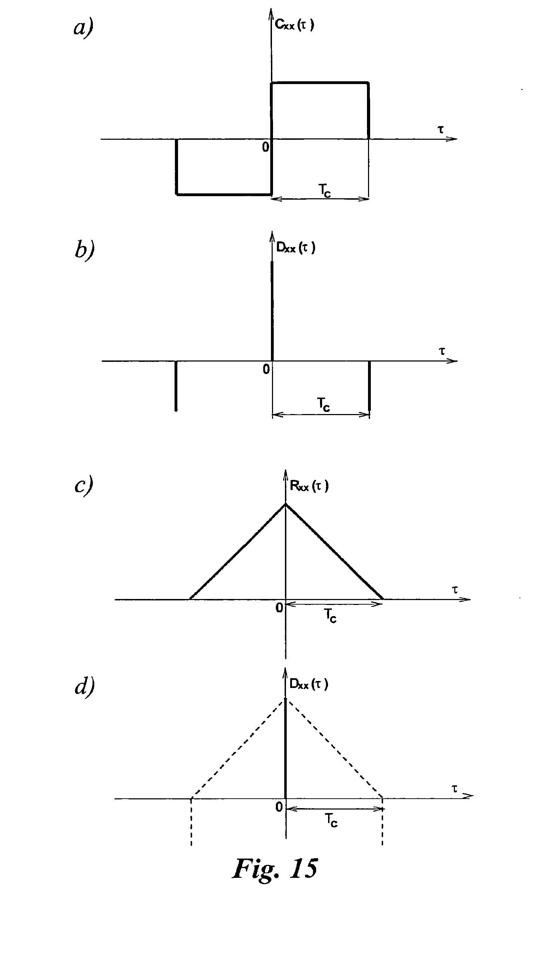

When a synchronous random binary signal is used, the crosslation function $C_{xx}(\tau)$ would, ideally, take the form shown in Fig. 15a. This is similar in form to the function of Fig. 7a, but assumes a discrete level for each clock period of the binary waveform. The function corresponds to the average level of segments of the waveform Y(t) staggered by the intervals between the transitions in the signal X(t) (which may only occur when a clock pulse is generated). Thus, where the delay value is such that the two waveforms coincide, all the positive-going transitions in the waveform Y(t) align. Accordingly, the crosslation function exhibits a negative value followed by an equal positive value. (The negative-going transitions also coincide, but because the corresponding samples are subtracted, these have the same effect on the crosslation function as the positive-going transitions.) Outside the delay interval corresponding to these two clock periods, for uncorrelated binary states, the crosslation function will average to zero.

The differential crosslation function $D_{xx}(\tau)$ has the form shown in Fig. 15b. This function can be generated directly, as it is for example in the circuit of Fig. 11, because the counters UDC count the transitions in the waveform Y(t). Positive-going transitions in the signal X(t) will cause simultaneous positive-going transitions in the signal Y(t) to increment the counter UDC, and simultaneous negative-going transitions in the signal Y(t) to decrement the counter UDC. The counter will therefore adopt a value corresponding to the average time derivative of the Y(t) signal at the times of the positive-going transitions in the X(t) signal. Negative-going transitions in the X(t) signal have the opposite effect, so the average time derivative of the Y(t) signal at the times of the negative-going transitions in the X(t) signal will be subtracted from the count value.

Irrespective of how it is generated, the differential crosslation function $D_{xx}(\tau)$ will have a large positive value (corresponding to the coincident concordant transitions, both positive-going and negative-going) at a delay value at which the waveforms X(t) and Y(t) coincide. This is preceded and followed by negative excursions, each separated from the positive peak by a delay corresponding to a single clock period of the binary waveform. Each negative excursion, or sidelobe, occurs because a positive-going (for example) transition of the waveform Y(t) can be preceded and followed (at a one clock period delay) only by a negative-going transition (or no transition). Therefore, with a one clock period delay between the waveforms, positive-going transitions of the X(t) waveform will coincide with negative-going transitions of the Y(t) waveform, and *vice versa.* These discordant transitions cause the negative excursions in Fig. 15b. The negative excursions are only about half the height of the central positive excursion because, with a one clock period delay, transitions in the X(t) waveform will coincide with discordant transitions in the Y(t) waveform or no transitions in the Y(t) waveform with substantially equal likelihood (assuming the binary states are chosen randomly).

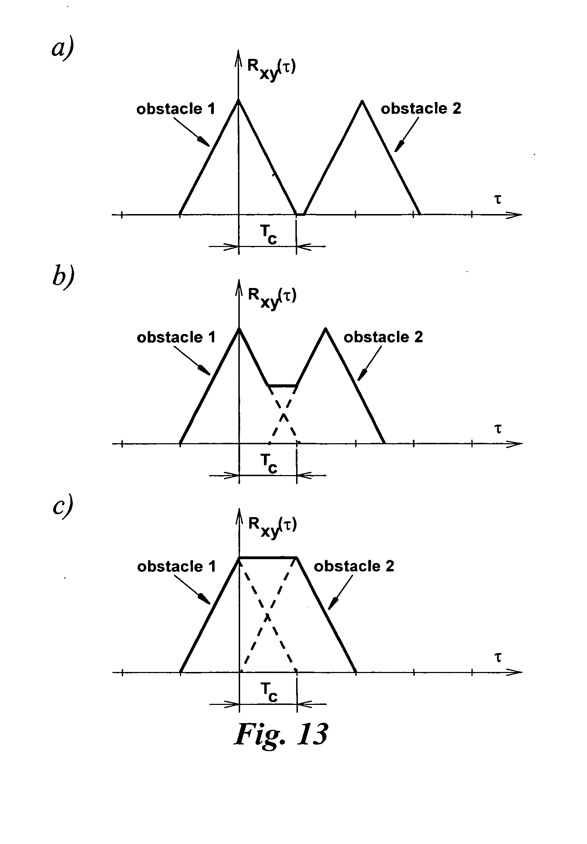

In general, correlation-based signal processing is not capable of resolving two obstacles if the distance between them is less than $c(T_c/2)$, where c is the speed of light, and $T_c$ is the clock period used for generating binary waveforms employed for obstacle detection. Fig. 13 shows examples of the output signal $R_{xy}(\tau)$ of a correlator for three different distances between two identical obstacles. As seen in Fig. 13c, even in this ideal case (no noise, no bandwidth limitation and infinite observation time), the two distinct correlation peaks merge into a single one for two closely-spaced obstacles.

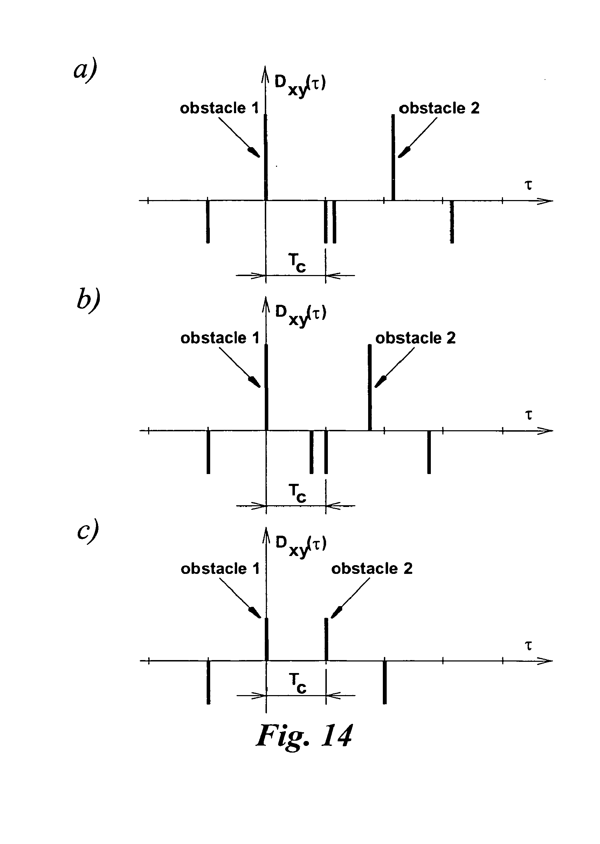

When differential crosslation is exploited in this ideal case, the two obstacles can be resolved irrespective of their distance, in the case of infinite bandwidth and absence of noise. Fig. 14 shows examples of the output signal $D_{xy}(\tau)$ of a differential crosslator which receives a synchronous binary signal for three different distances between two identical obstacles.

Although, as can be seen from Fig. 14, the positive peaks are clearly visible, in the presence of noise, and with a limited bandwidth, distortion can cause the negative sidelobes to interfere with the identification of the positive peaks. For example, if the transmitted binary signal is phase modulated, the receiver will not normally have a fixed reference to permit unambiguous recognition of the individual binary states of the received signal; in this case each negative sidelobe may be perceived as a positive peak.

Accordingly, it would be desirable to provide an improved high-resolution technique for time-delay and distance measurement, for example for application in obstacle-detection systems or positioning systems operating in multi-user environments.

## SUMMARY OF THE INVENTION

Aspects of the present invention are set out in the accompanying claims.

In accordance with a further aspect of the invention, a differential crosslator is used to process binary signals having an irregular (e.g. random, which term includes pseudorandom) succession of states. The differential crosslator produces an output representing the average derivative of one of the signals (which has a level dependent on its binary state) at the times of state transitions in the other signal, for a given delay introduced between the signals. In order to mitigate the effects of the negative sidelobes mentioned above, the output of the differential crosslator is combined with a value representing the correlation between the two signals. When the relative delay is such that the differential crosslation function generates a negative sidelobe, the correlation value will be low, so that by combining the two values it is possible to reduce or eliminate the negative sidelobe. Thus, by combining the outputs of the correlator and differential crosslator, there is provided an output better suited for high-precision delay measurements.

The invention is applicable to a time delay measurement system wherein the combined output of crosslation and correlation is determined for multiple values of the introduced delay, to determine that delay which brings the transitions in the two signals into substantial coincidence.

In a preferred embodiment, the time delay between two signals is measured by combining the results of (a) differential crosslation, (b) early correlation and (c) late correlation, thus more effectively removing the negative sidelobes which would otherwise occur due to the differential crosslation.

The invention extends to the use of time delay measurement for object detection systems, by measuring the delay between a transmitted signal and its reflection from an object, and position-determining systems which determine a position by measuring the relative delays between signals of one or more signal pairs received from plural known locations, so that the bearings of those known locations can be determined. However, the invention can also be used simply to determine whether or not an object is located at one particular range, e.g. for a surveillance system.

## BRIEF DESCRIPTION OF THE DRAWINGS

Arrangements embodying the present invention will now be described by way of example with reference to the accompanying drawings.

Fig. 1a illustrates schematically a synchronous random binary waveform, Fig. 1b depicts the shape of the autocorrelation function optimal for ranging applications and Fig. 1c is a block diagram of a conventional circuit used to generate a bipolar synchronous random binary waveform.

Fig. 2 is an example of the autocorrelation function of a periodic pseudorandom binary waveform.

Fig. 3 is a block diagram of a conventional microwave obstacle-detection system.

Fig. 4 is a block diagram of a conventional cross-correlator system.

Fig. 5 shows an example of a crosslation function obtained experimentally.

Fig. 6 is a block diagram of a system utilizing crosslation for determining the time delay.

Fig. 7 depicts: (a) a theoretical crosslation function of a random binary signal; (b) and (c), at different scales, the difference between the crosslation function of (a) and its replica shifted by 0.001 of the time unit.

Fig. 8 is a block diagram of a differential crosslator.

Fig. 9a is an example of a discrete representation of an empirical crosslation function and Fig. 9b shows an empirical differential crosslation function.

Fig. 10 is a block diagram of a modified differential crosslator.

Fig. 11 is a block diagram of a digital differential crosslator.

Fig. 12 depicts an example of a possible structure of a logic block used by the digital differential crosslator.

Fig. 13 shows examples of the output signal of a correlator for three different distances between two identical closely-spaced obstacles.

Fig. 14 shows examples of the output signal of a differential crosslator for three different distances between two identical closely-spaced obstacles.

Fig. 15a illustrates schematically the crosslation function of a synchronous random binary waveform, Fig. 15b illustrates the corresponding differential crosslation function, Fig. 15c depicts the shape of a correlation function and Fig. 15d shows the result of combining the differential crosslation function and the correlation function.

Fig. 16 is a block diagram of a microwave obstacle-detection system in accordance with the present invention.

Fig. 17 is a block diagram of a modified version of the microwave obstacle-detection system of Fig. 16.

Fig. 18 is a diagram to illustrate the effect of the modification in the embodiment of Fig. 17.

Fig. 19 is a block diagram of another microwave obstacle-detection system in accordance with the present invention.

Fig. 20a illustrates the output of a differential crosslator of the Fig. 19 embodiment, Fig. 20b represents the combined outputs of correlators of Fig. 19 and Fig. 20c shows the result of combining the differential crosslator and correlator outputs.

## DETAILED DESCRIPTION OF THE PREFERRED EMBODIMENTS

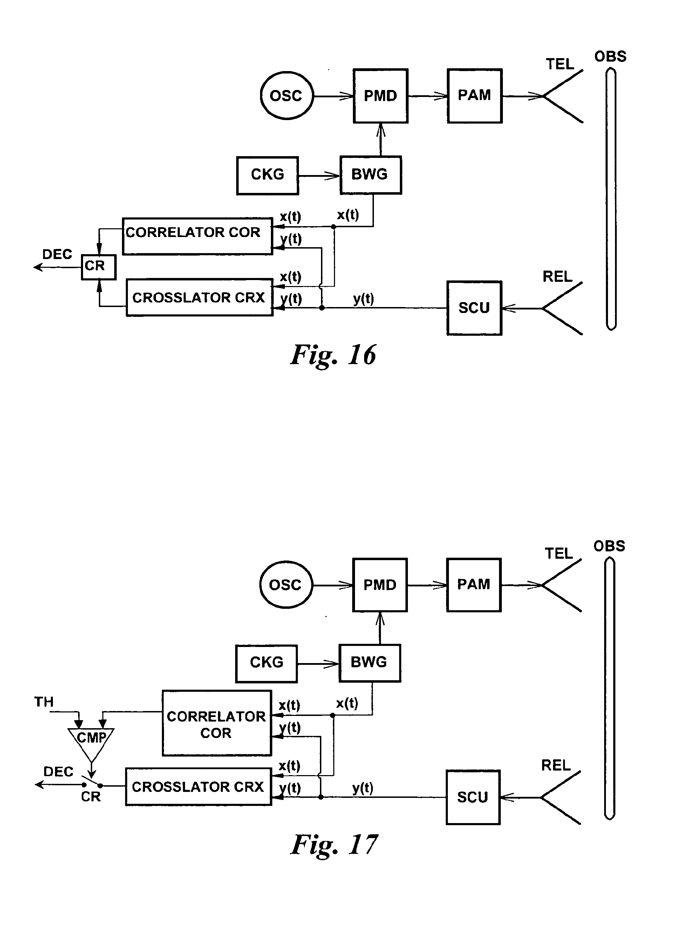

Fig. 16 shows a microwave obstacle-detection system in accordance with the present invention. Most of the system is similar to that of Fig. 3, and like references denote like integers.

The system differs in the use of a signal processing circuit which includes a differential crosslator CRX (which may be one of the arrangements shown in Figs. 8, 10 and 11) in addition to the correlator COR of Fig. 3. Both the correlator and the differential crosslator receive the reference signal x(t) and a signal y(t) which is a delayed (reflected) version of the reference input signal x(t).

The outputs of the correlator and differential crosslator are delivered to a combiner CR which may, for example, be a multiplier. In such a case, the combined output will be the product of two functions: a correlation function $R_{xx}(\tau)$ with the shape shown in Fig. 1b and Fig. 15c, and a differential crosslation function $D_{xx}(\tau)$ with the shape shown in Fig. 15b. Therefore, the resulting function, $[R_{xx}(\tau) D_{xx}(\tau)]$ shown in Fig. 15d and obtained at the combined output will exhibit an ideal shape required for high-precision delay measurements. In particular, the output will (in ideal circumstances) comprise a single, sharp, high-level, positive amplitude peak for each detected object, with no negative sidelobes. Thus, even in the presence of noise and even with a limited bandwidth, objects can more readily be detected than in prior art systems.

It can be seen from Fig. 15 that, in ideal circumstances, the positions of the negative sidelobes coincide with the points at which the correlation function decreases to zero. However, in practical arrangements, with finite bandwidth, it is possible that the negative sidelobes will not be completely attenuated. The modified arrangements described below are intended to mitigate this problem.

The embodiment of Fig. 17 is similar to that of Fig. 16, and like components are identified with like references, except as described below.

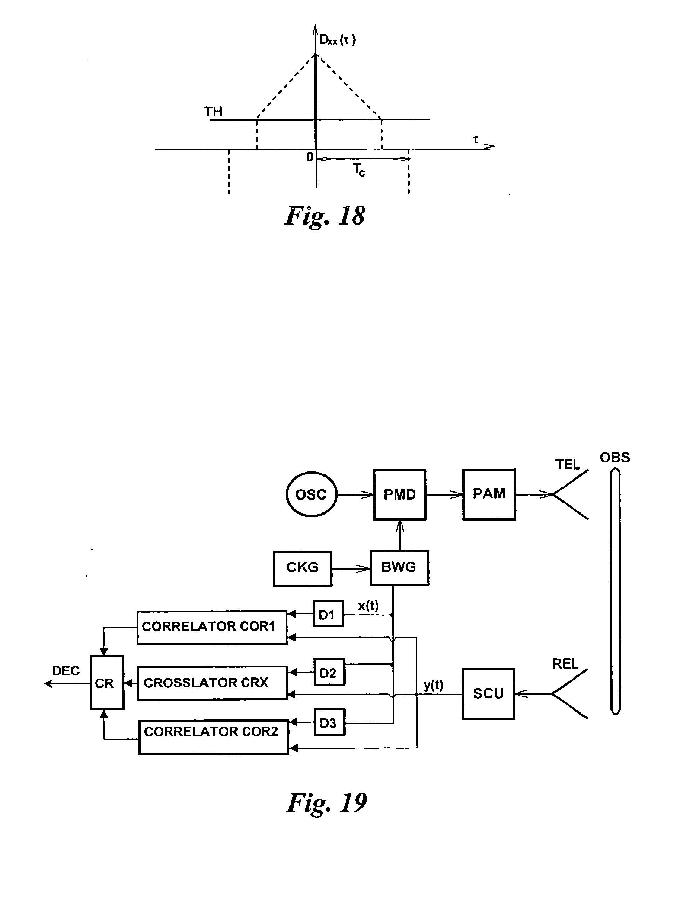

In Fig. 17, the output of the correlator COR is delivered to one input of a comparator CMP, another input of which is arranged to receive a predetermined threshold level TH. The comparator CMP produces an output signal only when the correlator output exceeds the threshold TH. This output signal closes a combiner CR in the form of a switch, permitting the output of the crosslator CRX to be used as the detection signal DEC. As indicated in Fig. 18, the use of an appropriately selected threshold TH ensures that the negative sidelobes from the crosslator CRX are removed.

Fig. 17 shows that a switch, by means of which the output of the correlator COR gates the output of the crosslator CRX, is another example of a suitable component to use for combining these outputs. Generally, any component which responds to concurrent (i.e. occurring for the same relative delay between signals x(t) and y(t)) high levels from these outputs could be used.

The embodiment of Fig. 19 is similar to that of Fig. 16, and like components are identified with like references, except as described below.

The correlator COR of Fig. 16 is replaced in Fig. 19 by two correlators COR1 and COR2. In addition, the reference signal x(t) is subjected to delays imposed by delay circuits D1, D2 and D3 before being presented to the correlator COR1, the crosslator CRX and the correlator COR2. The delay imposed by delay circuit D2 is mid-way between the delays imposed by delay circuits D1 and D3. Accordingly, the correlators COR1 and COR2 perform 'early' and 'late' correlation, with respect to the operation of the crosslator CRX.

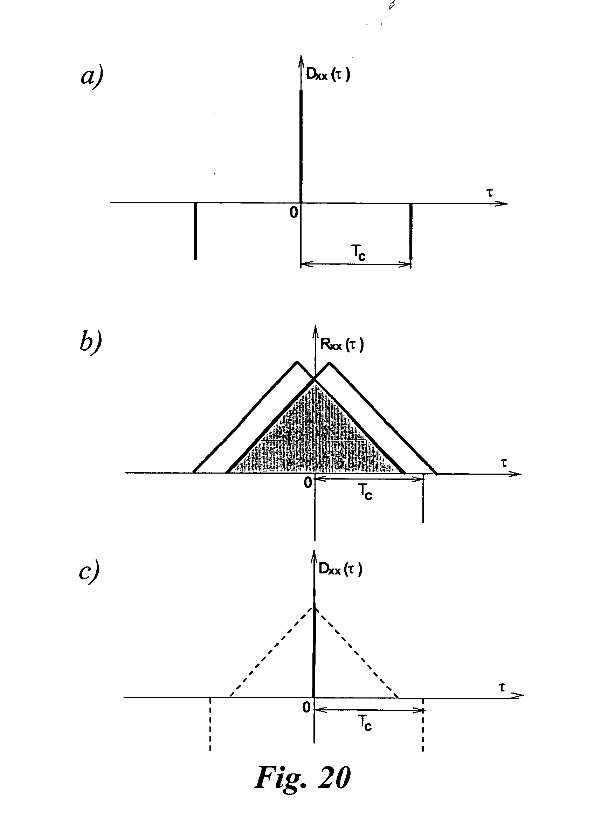

The effects of this operation can be seen by comparing Fig. 20 with Fig. 15. Fig. 20a shows the output of the crosslator CRX, which is the same as that shown in Fig. 15b. Fig. 20b shows the outputs of the 'early' and 'late' correlators COR1 and COR2. Their combined output, shown shaded in Fig. 20b, spans a delay period slightly less than $2T_c$. Accordingly, after combining these outputs with the output of the crosslator CRX to obtain the results shown at Fig. 20c, the negative sidelobes from the crosslator are more assuredly removed, with only slight attenuation of the central positive peak.

Assuming that crosslator CRX is providing an output derived by processing signals x(t) and y(t) with a delay therebetween of $\Delta T$, then the delays caused by circuits D1, D2 and D3 are preferably arranged so that the crosslator output is combined with correlation values, derived from 'early' and 'late' crosslators COR1 and COR2, which are based on signals x(t) and y(t) with a delay therebetween of, respectively, $\Delta T-ET$ and $\Delta T+LT$, where ET and LT are preferably substantially equal, and are each preferably $<T_c/2$ and more preferably $<T_c/4$.

The relative delays achieved using the circuits D1, D2 and D3 may alternatively be obtained by delaying the signal y(t). In practice, it is likely that separate external delay circuits would not be needed, the relative delays being achieved using the internal delay circuits of the crosslator CRX and the correlators COR1 and COR2, by selecting the appropriate parts of their outputs for combining in the combiner CR.

If desired, the outputs of the correlators COR1 and COR2 could be subjected to threshold comparison, as in the embodiment of Fig. 17.

The use of arrangements according to the invention will be especially advantageous in systems which already employ a correlator for various signal processing tasks.

It is not necessary to use two separate correlators COR1 and COR2; their functions can be provided by using a single correlator successively in two separate modes, e.g. by changing a delay applied to one of the signals x(t) and y(t).

The correlation operations can be performed in any of a number of ways which are, *per se,* known in the art, for example by integrating the product of the signals, or by using Fourier transforms, etc.

The combiner of the illustrated embodiments uses multiplication to generate an output, but other arrangements are possible, such as the use of gating circuits.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

If desired, the system may be arranged to determine whether an object is present only at a particular range, corresponding to a certain delay applied to one of the signals x(t) and y(t). Means may be provided for varying this delay, to enable use of the apparatus for other ranges.

The differential crosslator preferably uses events corresponding to both positive-going and negative-going transitions in the binary signal for sampling purposes, as in the arrangements of Figs. 8, 10 and 11, but this is not essential.

In the arrangements described above, the reference signal x(t) is used to sample the reflected signal y(t) in order to measure the delay between the signals. Instead, the reflected signal y(t) could be used to sample the reference signal x(t). However, it is unlikely this would be beneficial, particularly if there is significant noise in the received signal, and/or if multiple objects are present within the range of the apparatus.

The configuration of the logic circuit-based differential crosslator shown in Fig. 11 could be modified. In the illustrated arrangement, in each logic cell LC, each transition in the reference signal x(t) is used to sample the signal y(t) at two successive points (separated by the delay caused by delay unit D). A value dependent on the difference between the samples is fed to the counter UDC. Thus, the counter UDC accumulates a value dependent on the time derivative of the signal y(t). The operation is analogous to that of the differential crosslator of Fig. 10. (If desired, more than two samples of the signal y(t) could be taken to obtain a more accurate representation of the time derivative, although this is currently regarded as unnecessary.)

An alternative embodiment may have logic cells in which each transition of the signal x(t) causes the current value of the signal y(t) to be fed to an averager. The averagers then will collectively develop a representation corresponding to the crosslation function $C_{xx}(\tau)$ of Fig. 15a. This representation could then be differentiated with respect to the delay value (for example by extracting the differences between successive averagers, analogously to the arrangement of Fig. 8) to obtain the differential crosslation function. Thus, averaging the sample values and differentiating with respect to the delay value produces a similar result to that obtained by the illustrated Fig. 11 arrangement, in which the sampled time derivative is averaged.

In the described arrangements, the transmitted binary signal has a random sequence of states. Instead, the sequence of states may be selected in a non-random manner, although it should form an irregular pattern, at least throughout a period of interest.

The term "random" is intended herein to include, where context permits and without limitation, not only purely random, non-deterministically generated signals, but also pseudo-random and/or deterministic signals such as the output of a shift register arrangement provided with a feedback circuit as used in the prior art to generate pseudo-random binary signals, and chaotic signals.

The invention is particularly useful when applied to systems in which the transmitted binary signal is a continuous wave signal, and also to systems in which the signal is modulated in such a way (e.g. by phase modulation) that it has a substantially constant envelope. These properties enable an efficient and effective system.

As suggested above, the present invention is applicable to systems for detecting the presence of objects, such as obstacles, at unknown positions and/or ranges relative to an observer. The invention is also applicable to position-determining systems which detect the relative location and/or bearing with respect to known positions by receiving a plurality of signals (preferably at least 3) from the known positions and measuring the delays between respective pairs thereof.

## Claims

1. A method for processing first and second binary signals each containing an irregular succession of state transitions, the method comprising:

   (a) introducing a delay between the first and second signals;
   (b) using the first signal to sample the second signal and combining the samples so as to derive a first value representing the average time derivative of the second signal at the times of the transitions in the first signal;
   (c) deriving a correlation value for the first and second signals;
   (d) combining the first value and the correlation value to obtain a combined value;
   (e) determining from the combined value whether the introduced delay has brought the transitions in the first signal substantially into coincidence with those in the second signal.

2. A method as claimed in claim 1, wherein, in step (b), a plurality of samples of the second signal are obtained for each transition in the first signal so as to derive a result representing the time derivative of the second signal at the time of the respective transition, said first value being obtained by combining the results for the respective transitions.

3. A method as claimed in claim 1, wherein, in step (b), the second signal is sampled at the time of each transition in the first signal, the samples for respective transitions in the first signal are combined to obtain a result, and the results obtained for respective different delay values are subjected to differentiation with respect to the delay value to obtain the first value representing the average time derivative of the second signal.

4. A method as claimed in claim 3, wherein the result for each delay value is subtracted from the result for a different delay value to obtain the first value representing the average time derivative of the second signal.

5. A method as claimed in any preceding claim, wherein the first value and the correlation value are combined in such a way as to prevent the combined value from indicating substantial coincidence of the transitions in the first and second signals unless the correlation value exceeds a predetermined threshold.

6. A method as claimed in any preceding claim, wherein:

   step (b) is performed with a first delay between the first and second signals;
   in step (c) a first correlation value, indicative of the correlation between the first and second signal with a second delay therebetween, is derived, and a second correlation value, indicative of the correlation between the first and second signal with a third delay therebetween, is derived, the second and third delays being respectively less than and greater than said first delay; and

in step (d) the combined value is obtained by combining the first value with the first and second correlation values.

7. A method as claimed in any preceding claim, wherein the transitions in said first signal comprise positive-going state transitions and negative-going state transitions, and wherein step (b) comprises combining the samples in such a manner that the first value represents the difference between the average time derivative of the second signal substantially at the time of the positive-going state transitions and the average time derivative of the second signal substantially at the time of the negative-going state transitions.

8. A method for detecting an object, the method comprising the steps of:

   deriving first and second signals from a binary signal containing an irregular succession of state transitions, one of the first and second signals comprising a reference signal and the other comprising a received signal formed by reflection of a transmitted version of the binary signal; and

   processing the first and second signals using a method as claimed in any preceding claim to determine whether an object is present at a range corresponding to said introduced delay.

9. A method of determining the delay between first and second binary signals each containing an irregular succession of state transitions, the method comprising:

   processing the signals using a method as claimed in any one of claims 1 to 7;
   repeating each of steps (b) to (d) for different values of said introduced delay; and
   determining, from the combined values obtained for different introduced delays, the delay value which brings the transitions in the first signal substantially into coincidence with those in the second signal

10. A method for detecting an object, the method comprising the steps of:

    deriving first and second signals from a binary signal containing an irregular succession of state transitions, one of the first and second signals comprising a reference signal and the other comprising a received signal formed by reflection of a transmitted version of the binary signal; determining the delay between the first and second signals using a method as claimed in claim 9 to determine the range of an object from which the received signal has been reflected.

11. A method as claimed in claim 8 or claim 10, including the step of transmitting the binary signal as a continuous wave signal.

12. A method as claimed in claim 11, wherein the transmitted binary signal has a substantially constant envelope.

13. A method as claimed in claim 11 or claim 12, wherein the transmitted binary signal is phase modulated.

14. A method as claimed in any one of claims 8, 10, 11, 12 and 13, wherein the first signal is the reference signal and the second signal is the received signal.

15. A method as claimed in any preceding claim, including the step of generating a random binary sequence from which the first and second signals are derived.

16. A method of determining a position, the method comprising:

    receiving, at said position, a plurality of binary signals each containing an irregular succession of state transitions;
    for each received signal, determining the delay between that signal and another of said received signals using a method as claimed in claim 9; and
    calculating the position from the determined delays.

17. Apparatus arranged to perform a method as claimed in any preceding claim.

*a)*

**x(t)**

bipolar synchronous random binary waveform

+1

$T_c$

t

-1

*b)*

$R_{xx}(\tau)$

$T_c$

$\tau$

0

*c)*

| PHYSICAL NOISE SOURCE | → | ZERO CROSSING DETECTOR | → | D-TYPE FLIP-FLOP | → | LEVEL CONVERTER | → x(t) |

CLOCK GENERATOR

bipolar synchronous random binary waveform

## *Fig. 1*         *PRIOR ART*

**Fig. 2**   **PRIOR ART**

**Fig. 3**   **PRIOR ART**

**Fig. 4** *PRIOR ART*

crosslation function

**Fig. 5** *PRIOR ART*

CROSSLATOR

delay estimate

DATA PROCESSOR

1  2  ···  (J−1)  J  ···  (M−1)  M

x(t) → HX → CDX → BS → AVG   AVG   AVG   AVG   AVG   AVG

ZCD

IR

y(t) → HY → TDY → D1   D2   ···   DJ   ···   DM

*Fig. 6*     **_PRIOR ART_**

delay estimate

DPR

1  2  ···  J  ···  M

CROSSLATOR

x(t) → CDX → BS → AVG   AVG   AVG   AVG   AVG   AVG   AVG

ZCD

IR

y(t) → SCU → TDY → D   D   ···   D   ···   D
                    1   2       J       M

*Fig. 8*

*a)*

crosslation function $C_{xx}(\tau)$

*b)*

differential crosslation function

*c)*

differential crosslation function

**Fig. 7**

*a)*

*b)*

***Fig. 9***

*Fig. 10*

*Fig. 11*

**Fig. 12**

*a)*

*b)*

*c)*

*Fig. 13*

*a)*

*b)*

*c)*

*Fig. 14*

*Fig. 15*

**Fig. 16**

**Fig. 17**

*Fig. 18*

*Fig. 19*

a)

$D_{xx}(\tau)$

$\tau$

0

$T_c$

b)

$R_{xx}(\tau)$

$\tau$

0

$T_c$

c)

$D_{xx}(\tau)$

$\tau$

0

$T_c$

*Fig. 20*

**European Patent Office**

## EUROPEAN SEARCH REPORT

Application Number

EP 05 25 6584

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 4 357 610 A (KINGSTON ET AL)<br>2 November 1982 (1982-11-02)<br>* column 4, line 55 - column 5, line 25 * | 1,8-10,<br>16,17<br>2-7,<br>11-15 | INV.<br>G01S13/32 |
| Y | US 4 053 888 A (ROBIN ET AL)<br>11 October 1977 (1977-10-11)<br>* abstract; figures 1,2 *<br>* column 2, line 15 - line 46 * | 2-7,<br>11-15 | |
| A | US 4 014 021 A (FOURNIER ET AL)<br>22 March 1977 (1977-03-22)<br>* column 2, line 1 - column 3, line 38;<br>figures 1-3 * | 1-17 | |
| A | EP 0 601 884 A (GEC-MARCONI LIMITED;<br>MARCONI GEC LTD) 15 June 1994 (1994-06-15)<br>* column 7, line 4 - line 22; figures 3,5<br>* | 1-17 | |
| A,D | US 6 539 320 B1 (SZAJNOWSKI WIESLAW JERZY<br>ET AL) 25 March 2003 (2003-03-25)<br>* the whole document * | 1-17 | TECHNICAL FIELDS SEARCHED (IPC)<br><br>G01S |
| A,D | SZAJNOWSKI W J ET AL: "Implicit averaging<br>and delay determination of random binary<br>waveforms"<br>IEEE SIGNAL PROCESSING LETTERS IEEE USA,<br>vol. 9, no. 7, July 2002 (2002-07), pages<br>193-195, XP002377189<br>ISSN: 1070-9908<br>* abstract; figure 1 *<br>* page 195, paragraph IV. * | 1-17 | |

The present search report has been drawn up for all claims

| Place of search | Date of completion of the search | Examiner |
|---|---|---|
| Munich | 18 April 2006 | Mercier, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 05 25 6584

This annex lists the patent family members relating to the patent documents cited in  the above-mentioned European search report.
The members are as contained in the European Patent Office EDP file on
The European Patent Office is in no way liable for these particulars which are merely  given for the purpose of information.

18-04-2006

| Patent document cited in search report | | Publication date | Patent family member(s) | | Publication date |
|---|---|---|---|---|---|
| US 4357610 | A | 02-11-1982 | DE | 3170859 D1 | 11-07-1985 |
| | | | EP | 0049149 A1 | 07-04-1982 |
| US 4053888 | A | 11-10-1977 | DE | 2645545 A1 | 14-04-1977 |
| | | | FR | 2327553 A1 | 06-05-1977 |
| | | | GB | 1514039 A | 14-06-1978 |
| US 4014021 | A | 22-03-1977 | DE | 2542628 A1 | 15-04-1976 |
| | | | FR | 2286391 A1 | 23-04-1976 |
| | | | GB | 1506412 A | 05-04-1978 |
| EP 0601884 | A | 15-06-1994 | GB | 2273409 A | 15-06-1994 |
| | | | NO | 934527 A | 13-06-1994 |
| US 6539320 | B1 | 25-03-2003 | AU | 1882400 A | 31-07-2000 |
| | | | EP | 1145084 A1 | 17-10-2001 |
| | | | WO | 0039643 A1 | 06-07-2000 |
| | | | GB | 2345149 A | 28-06-2000 |
| | | | JP | 3706305 B2 | 12-10-2005 |
| | | | JP | 2002533732 T | 08-10-2002 |
| | | | JP | 2005249800 A | 15-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6539320 B
- EP 04252785 A
- US 12727105 A
- EP 04252786 A
- US 12716505 A

### Non-patent literature cited in the description

- **W. J. SZAJNOWSKI ; P. A. RATLIFF.** Implicit Averaging and Delay Determination of Random Binary Waveforms. *IEEE Signal Processing Letters.*, 2002, vol. 9, 193-195